Europäisches Patentamt

European Patent Office

Office européen des brevets

(19)

(11) EP 1 398 691 A2

(12) **EUROPEAN PATENT APPLICATION**

(43) Date of publication:
17.03.2004 Bulletin 2004/12

(51) Int Cl.7: **G06F 7/58**

(21) Application number: 03020450.7

(22) Date of filing: 12.09.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **13.09.2002 JP 2002269129**

(71) Applicant: **Kabushiki Kaisha Toshiba
Tokyo (JP)**

(72) Inventors:
• **Yasuda, Shinichi
1-1 Shibaura 1-chome Minato-ku Tokyo (JP)**
• **Fujita, Shinobu
1-1 Shibaura 1-chome Minato-ku Tokyo (JP)**

(74) Representative: **HOFFMANN - EITLE
Patent- und Rechtsanwälte
Arabellastrasse 4
81925 München (DE)**

(54) **Random number generator**

(57) A random number generator comprising a counter circuit configured to be supplied with a clock signal and a random signal, and to provide a count value of the clock signal with respect to a transition of the random signal, and a first latch circuit configured to latch the count value with respect to the transition of the random signal, and to provide a first random number signal.

# FIG. 1

EP 1 398 691 A2

**Description**

CROSS REFERENCE TO RELATED APPLICATIONS

This application is based upon and claims the benefit of priority from prior Japanese Patent Application P2002-269129 filed on SEP 13, 2002; the entire contents of which are incorporated by reference herein.

1. Field of the Invention

The invention relates to a random number generator, which specifically generates a random number irregularly.

2. Description of the Related Art

Conventionally, coding by a random number is used for protecting information; generation of a password, code key generation, generation of ID information and generation of digital signature information, in the field of "information and communication" technology of such as electronic commerce or radio communication. As for methods for generating a random number, a method for generating a random number by means of a software program has been widely adopted.

However, generating a random number by software has a weak point. The method creates side conditions and side parameters in order to generate a random number based on a numerical formula operated through a program. There was a problem that coding through a program could be decoded, and personal information could not be sufficiently protected.

For the foregoing reason, a random number that is not influenced by a frequency characteristic has been desired.

There is a method to generate a random number by means of a random number generator which does not have a periodicity influenced by a 1/f characteristic. The method is based on a noise from a noise source which has a 1/f characteristic (see Japanese Patent Laid-Open (Kokai) No. 2002-41281).

The random number generator which is disclosed in the Japanese Patent Laid-Open (Kokai) No. 2002-41281, comprises a noise generators; a differential circuit which connects to the output side of the noise generators individually; an A/D converter which connects to the output side of a differential circuit; and an arithmetic circuit which connects to the output side of the A/D converter.

At first, the noise generators supply a noise signal that involves 1/ f characteristic. Next, the differential circuit supplies a differential signal based on the difference of two noise signals from the noise generators as an analog signal. The A/D converter converts the analog signal from the differential circuit to a digital signal.

The arithmetic circuit outputs "0" when a digitally converted signal does not reach a threshold level, or outputs "1" when the signal reaches the threshold level. The arithmetic circuit adjusts the threshold level so that the probability of occurrence of "0" and "1" becomes 0.5.

However, the disclosed random number generator has some problems. Firstly, the random number generator has a filter, an analog circuit such as differential circuit and two noise generators, they requires large occupation area on a semiconductor chip. Furthermore, the disclosed random number generator requires the setting up and adjusting of the threshold level of the arithmetic circuit to adjust the probability of occurrence of "0" and "1".

An object of the present invention is to provide a random number generator which does not include plural noise generators, permits miniaturization, generates a random number which is not influenced by a frequency characteristic, and does not need adjusting of the probability of appearance of "0" and "1".

SUMMARY OF THE INVENTION

In order to attain the above-described object, a first aspect of the present invention inheres in a random number generator, including; (a) a counter circuit configured to be supplied with a clock signal and a random signal, and to provide a count value of the clock signal with respect to a transition of the random signal; and (b) a first latch circuit configured to latch the count value with respect to the transition of the random signal, and to provide a first random number signal.

A second aspect of the present invention inheres in a random number generator, including: (a) an AND circuit configured to be supplied with a random signal and a clock signal, and to generate a logic product of the random signal and the clock signal; (b) a dividing latch circuit configured to provide alternately a high level signal and a low level signal with respect to the logic product output; and (c) a first latch circuit configured to latch the count value with respect to a transition of the random signal, and to provide a random number signal.

BRIEF DESCRIPTION OF DRAWINGS

Fig.1 shows a random number generator according to the first embodiment of the present invention.

Fig.2 is a timing chart showing relationships of signal waveforms of the random number generator according to the first embodiment of the present invention.

Fig.3 shows a random signal waveform generated by a random number generator according to the first embodiment of the present invention.

Fig.4 shows a power spectrum of a random signal according to the first embodiment of the present invention.

Fig.5 shows a random number signal generated by a random number generator related to a form of the first embodiment of the present invention.

Fig.6 shows a power spectrum of a random number signal generated by a random number generator according to the first embodiment of the present invention.

Fig.7A shows a period characteristic of a random number signal generated by a random number generator according to the first embodiment of the present invention.

Fig.7B shows a periodicity of a random number signal generated by a conventional random number generator.

Fig.8 shows a configuration of the random number generator according to the second embodiment of the present invention.

Fig.9 is a timing chart showing a relationship of waveforms of a random number generator according to the second embodiment of the present invention.

Fig.10 shows a configuration of a random number generator according to the third embodiment of the present invention.

Fig.11 is a timing chart showing a relationship of waveforms of a random number generator according to the third embodiment of the present invention.

Fig.12 shows a random number generator according to the fourth embodiment of the present invention.

Fig.13 is a timing chart showing a relationship of waveforms of a random number generator according to the fourth embodiment of the present invention

Fig.14 shows a random number generator according to the fifth embodiment of the present invention.

Fig.15 is a timing chart showing a relationship of waveforms of a random number generator according to the fifth embodiment of the present invention

Fig.16 shows a random number generator according to another embodiment of the present invention.

DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified. Generally and as it is conventional in the representation of circuits and system, it will be appreciated that the various drawings are not drawn to scale from one figure to another nor inside a given figure.

In the following descriptions, numerous specific details are set forth such as specific signal values, etc. to provide a thorough understanding of the present invention. However, it will be obvious to those skilled in the art that the present invention may be practiced without such specific details. In other instances, well-known circuits have been shown in block diagram form in order not to obscure the present invention in unnecessary detail.

At first, "random signal RS" of the first through the fifth embodiments are explained. "Random signal RS" is a digital signal comprising a plural square waves that have on-state pulse width and off-state width that are not fixed to constant values. "Random signal RS" has a characteristic in which a value of a power spectrum is not fixed, and, in particular, the intensity decreases with increase of frequency.

It is preferable that the amplitude of the square wave is uniform, however, the embodiments here are not particularly limited to the uniform amplitude. For example, random signal RS is generated by the oscillation circuit that uses a delay time of a CR delay circuit which is implemented by a resistance and a capacitor. And, the behavior that the resistance and the capacitor value vary randomly is used for generating random signal RS. Examples of the power spectrum having the characteristic that the intensity decreases with frequency includes fluctuating signals having 1/f characteristic, and so on.

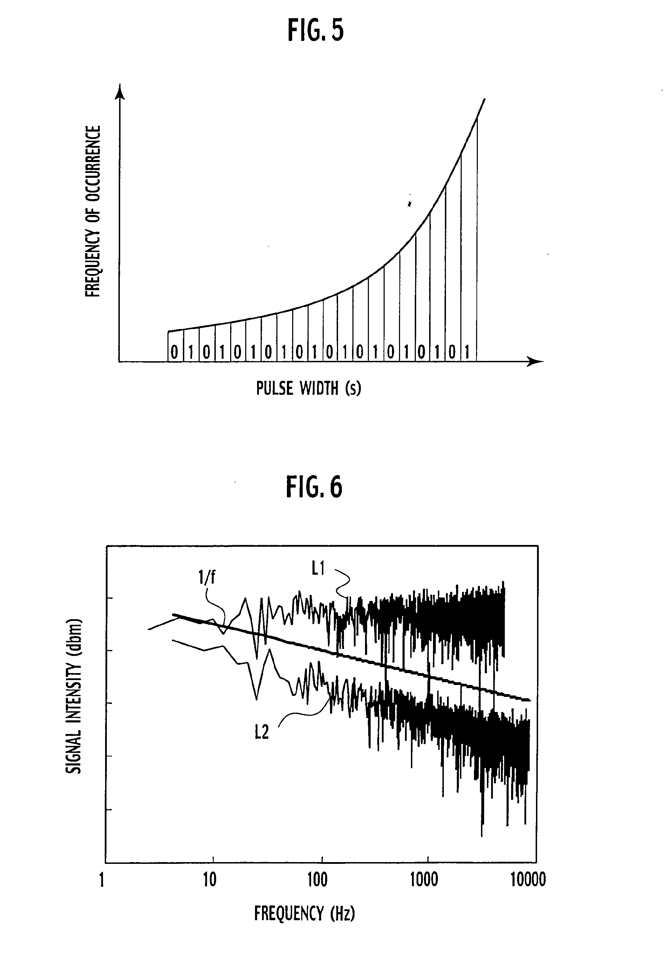

The term "1/f" expresses a characteristic of a power spectrum in which Fourier analyzed intensities decreases with an inclination of 45 degrees, in inverse proportion to Fourier frequency f. If the chronological order data of the signal having the 1/f characteristic is spectrum-analyzed by Fourier conversion, an inclination of "-1", in a both logarithms plot of the signal intensity and the frequency can be observed as shown in Fig.6.

(FIRST EMBODIMENT)

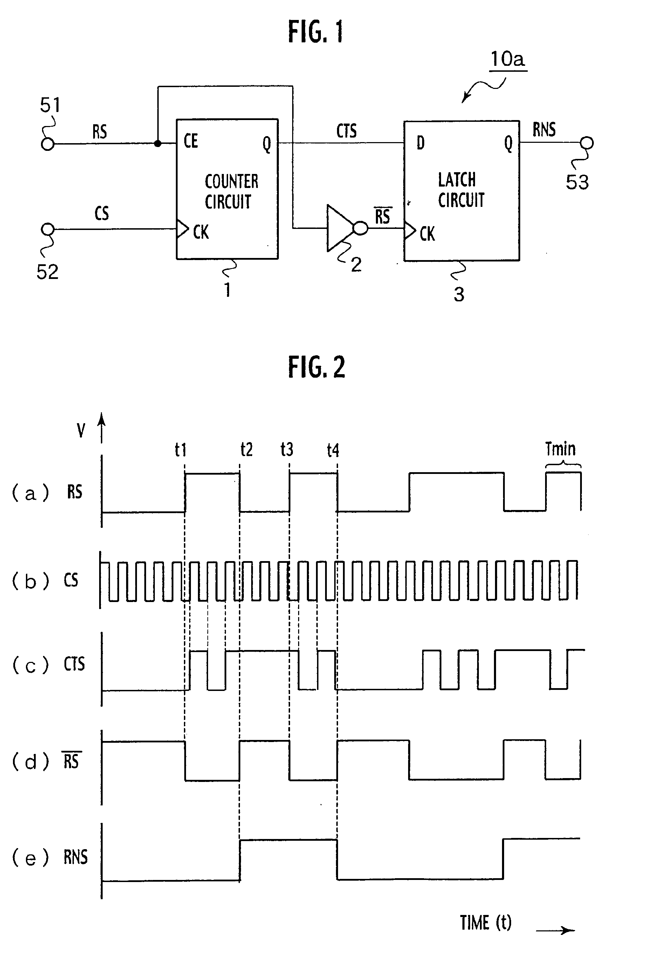

A random number generator 10a associated with the first embodiment of the present invention, as shown in Fig.1 encompasses a counter circuit 1 and a first latch circuit 3. The counter circuit 1 is supplied with a clock signal CS through a clock input CK a random signal RS through a clock enable input CE and provides a count value of clock signal CS with respect to a change of the random signal RS. The first latch circuit 3 latches a count value with respect to a change of the random signal RS and outputs a random number signal RNS. Additionally, inverter 2 is connected between the clock enable input CE of the counter circuit 1 and the clock input CK of the first latch circuit 3.

The square wave input 51 transfers a random signal RS to the clock enable input CE of counter circuit 1. The clock input 52 transfers the clock signal CS that electrically connects to clock input CK of counter circuit 1. An output node of inverter 2 electrically connects to the clock input CK of the first latch circuit 3. An output Q of the counter circuit 1 electrically connects to an input D of the first latch circuit 3. The output Q of the first latch circuit 3 electrically connects to the random number output 53.

An operation of the random number generator 10a associated with the first embodiment of the present invention is explained by means of Fig.2 as follows.

(A) At first, as shown in Fig.2A, a random signal RS which is supplied from the square wave input 51 turns into a high level from a low level in time t1.

(B) The counter circuit 1 provides a count signal CTS from the output Q, during the time random signal RS is in the high level state in the interval from time t1 to t2. As shown in Fig. 2C, the count signal CTS alternates the high level and the low level states by detecting the leading edge of the clock signal CS shown in Fig. 2B. The counter circuit 1, here, is a 1 bit counter so that the low level and the high level states alternate every 1 count.

(C) Random signal RS turns into low level from high level in time t2. As shown in Fig. 2D, inverter 2 provides a random turning over signal $\overline{RS}$, turning into the high level. When the random turning over signal $\overline{RS}$ becomes the high level, the first latch circuit 3 latches count signal CTS supplied from the counter circuit 1 by detecting a leading edge of the random turning over signal RS fed in the clock input CK, and provides a random number signal RNS as shown in Fig.2E.

(D) In time t3, the random signal RS again turns into the high level from the low level. The counter circuit 1 alternates the level of count signal CTS by detecting each of the leading edges of the clock signal CS, while the random signal RS keeps the high level state.

(E) In time t4, random signal RS turns into the low level from the high level. When the random signal RS becomes the low level, the inverter 2 provides a random turning over signal $\overline{RS}$ having the high level as shown in Fig. 2D. When the random turning over signal $\overline{RS}$ becomes the high level, the first latch circuit 3 latches the count signal CTS which is supplied from the counter circuit 1, by detecting the leading edge of the random turning over signal $\overline{RS}$ fed into the clock input CK, and provides the random number signal RNS as shown in Fig.2E. The same operation, i.e., providing the random number signal RNS by detecting the trailing edge of random signal RS, is repeated.

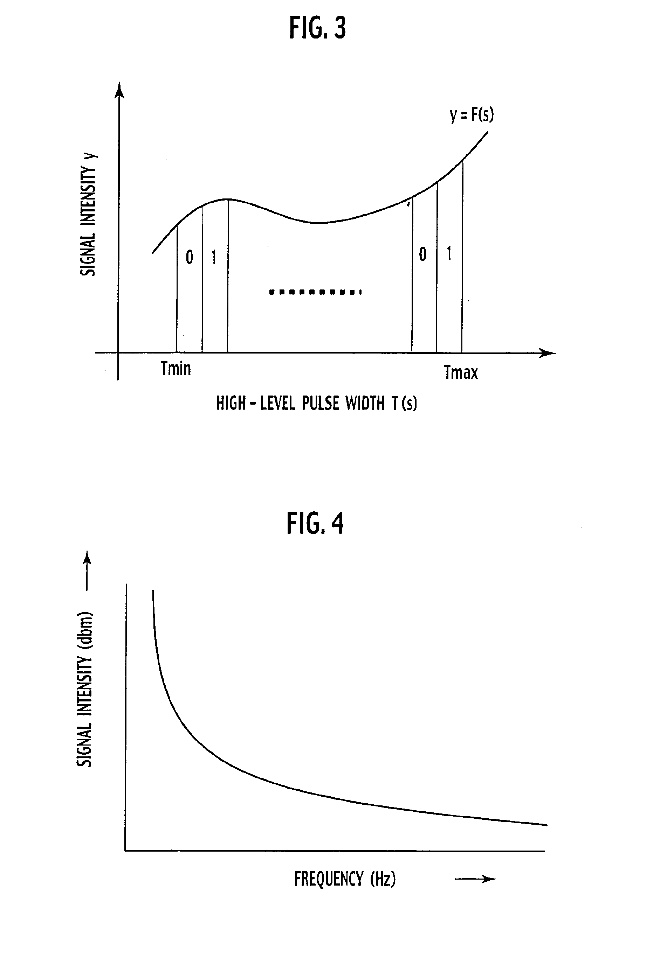

Next, a probability that the output of the random number signal RNS becomes "0" or "1" is expressed by means of Fig.3. The random signal RS is assumed to be expressed by a function of "y = F (s)". In Fig.3, the on-state pulse width of the random square wave composing the random signal RS is "T", the minimum on-state pulse width is "Tmin", and the maximum on-state pulse width is "Tmax". The value obtained by subtracting the minimum on-state pulse width Tmin from the maximum on-state pulse width Tmax is defined as the on-state zone "Tz". The value obtained by diving the on-state zone Tz by a period of the resolution setting clock signal SC is defined as partition number "N".

The on-state zone TZ is decided by means of some parameters such as frequency characteristics of resistances and diodes that generate the random square waves, characteristics of circuitry providing the square waves and characteristics of filters and so on.

When a distribution function of the random square wave having the on-state pulse width T is defined as F (t), the probability Pt (0) that the random number generator outputs "0" under the condition that the partition number N is an even number, is shown by:

$$Pt(0) = \int_{T_{min}}^{T_{min} + \frac{\Delta T}{N}} F(t)dt + \int_{T_{min} + \frac{2\Delta T}{N}}^{T_{min} + \frac{3\Delta T}{N}} F(t)dt + \cdots + \int_{T_{min} + \frac{(N-2)\Delta T}{N}}^{T_{min} + \frac{(N-1)\Delta T}{N}} F(t)dt \quad \cdots (1)$$

The probability Pt (1) that the random number generator outputs "1" when the partition number N is an even number, is shown by:

$$Pt(1) = \int_{T_{min} + \frac{\Delta T}{N}}^{T_{min} - \frac{2\Delta T}{N}} F(t)dt + \int_{T_{min} + \frac{3\Delta T}{N}}^{T_{min} + \frac{4\Delta T}{N}} F(t)dt + \cdots + \int_{T_{min} - \frac{(N-1)\Delta T}{N}}^{T_{max}} F(t)dt \quad \cdots(2)$$

The probability Pt (0) that the random number generator outputs "0" when the partition number N is an odd number, is shown by:

$$Pt(0) = \int_{T_{min}}^{T_{min} + \frac{\Delta T}{N}} F(t)dt + \int_{T_{min} + \frac{2\Delta T}{N}}^{T_{min} + \frac{3\Delta T}{N}} F(t)dt + \cdots + \int_{T_{min} + \frac{(N-1)\Delta T}{N}}^{T_{max}} F(t)dt \quad \cdots(3)$$

The probability Pt (1) that the random number generator outputs "1" when the partition number N is an odd number, is shown by:

$$Pt(1) = \int_{T_{min} + \frac{\Delta T}{N}}^{T_{min} + \frac{2\Delta T}{N}} F(t)dt + \int_{T_{min} + \frac{3\Delta T}{N}}^{T_{min} + \frac{4\Delta T}{N}} F(t)dt + \cdots + \int_{T_{min} + \frac{(N-2)\Delta T}{N}}^{T_{min} + \frac{(N-1)\Delta T}{N}} F(t)dt \quad \cdots(4)$$

When a partition number N is an even number, a difference of the frequency of occurrence of "0" and "1" is expressed with "Pt (0) -Pt (1)". When this is calculated, the result shows:

$$Pt(0) - Pt(1)$$
$$= \int_{T_{min}}^{T_{min} + \frac{\Delta T}{N}} \left\{ F(t) - F(t + \frac{\Delta T}{N}) + F(t + \frac{2\Delta T}{N}) - F(t + \frac{3\Delta T}{N}) + \cdot - F(t + \frac{(N-2)\Delta T}{N}) + F(t + \frac{(N-1)\Delta T}{N}) \right\} dt \quad \cdots(5)$$

When a partition number N is an even number, a difference of the frequency of occurrence "0" or "1" is expressed in "Pt (0) -Pt (1)". When this is calculated, the result shows:

$$Pt(0) - Pt(1)$$
$$- \int_{T_{min}}^{T_{min} + \frac{\Delta T}{N}} \left\{ F(t) - F(t + \frac{\Delta T}{N}) + F(t + \frac{2\Delta T}{N}) - F(t + \frac{3\Delta T}{N}) - \cdots + F(t + \frac{(N-3)\Delta T}{N}) - F(t + \frac{(N-2)\Delta T}{N}) \right\} dt$$
$$+ \int_{T_{min}}^{T_{min} + \frac{\Delta T}{N}} F(t + \frac{(N-1)\Delta T}{N}) \quad \cdots(6)$$

Formulas (5) and (6) show whether the partition number N is an even number or an odd number, the value of the partition number N is bigger, a difference of the frequency of occurrence of "0" or "1" becomes smaller. In other words, it is shown that the frequency of the clock signal CS is higher, a bias of the frequency of occurrence "0" or "1" becomes smaller. That is to say, it is necessary to select clock frequency with respect to characteristics of the random number in order to generate the random number.
A difference d (0) between a probability of occurrence of "0" and the ideal value "0.5" is shown by:

$$d(0) = 0.5- |(Pt (0) / (Pt (0) + Pt (1))| \qquad (7)$$

A difference d(1) between a probability of occurrence of "1" and the ideal value "0.5" is shown by:

$$d(1) = 0.5- |(Pt\ (1)\ /\ (Pt(0) + Pt\ (1))| \qquad (8)$$

Values of d (1) and d (0) are defined by the criteria for use. For example, if it is directed to the officially approval standard FIPS140-2 of the U.S. Department of Commerce, which is established for the security in the communication network, the value of d (0) or d(1) must be less than 0.01375. Thus, it is necessary to set the frequency of clock signal CK to satisfy the criteria.

As one method to express random signal RS, a power spectrum is used, in which the power spectrum is divided into a plurality of frequency bands, and the powers of every frequency band are expressed as functions of frequency. A spectrum of a cyclical signal wave consists of the basic frequency components and the harmonics components thereof, and can be expressed by the sum of squares of the amplitude of each of the components with the time domain function x (t), the power spectrum X (f) is:

$$X(f) = \int_0^\infty x(t)e^{-j2\pi ft}\,dt \qquad \cdots(9)$$

The random signal RS which is fed into the random number generator 10a shows a power spectrum in which signal intensity expressed along ordinate decreases with an inverse proportion with the increase of the frequency along abscissa in Fig.4. As shown in Fig. 5, distribution of frequency shows a curve, in which parameter along abscissa is changed to a "period" from "frequency", and a power spectrum of the random signal RS having the on-state pulse width T.

When the on-state pulse width is T (s), the random number generator decides to output "0" or "1" for every period Tck of clock signal CS. When the period of clock signal CS is smaller, the frequency of each occurrence "0" and "1" becomes closer to 0.5.

In Fig. 6, L1 expresses a power spectrum of random number signal RNS which is provided by the random number generator 10a in Fig.1. A power spectrum of random signal RS generated from a 1/f noise source is expressed by L2. While the power spectrum L2 of random signal RS decreases when the frequency becomes higher, the power spectrum L1 of the random number signal RNS can generate random number signal RNS without depending upon the frequency characteristic.

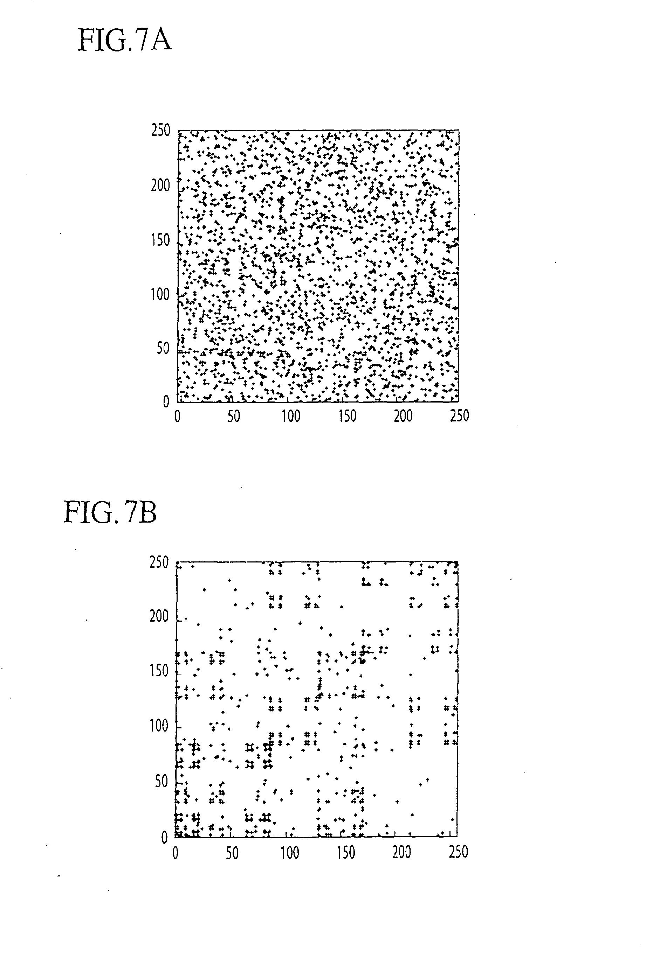

Next, random signal RS is fed as serial data of 8 bits. Previous data 0-255 are shown along ordinate, next data 0-255 are shown along abscissa. The data are plotted 2500 times successively under this condition. Then, random number signal RNS which is provided by random number generator 10a is distributed approximately uniformly as shown in Fig. 7A. On the other hand, a random number signal which is provided by a conventional random number generator fluctuates as shown in Fig. 7B.

Random number generator 10a related to the first embodiment of the present invention does not require a plurality of noise generators, and can be miniaturized. Random number generator 10a generates a random number that does not depend upon a frequency characteristic, and does not require adjustment of the probability of occurrence of "0"and "1".

(SECOND EMBODIMENT)

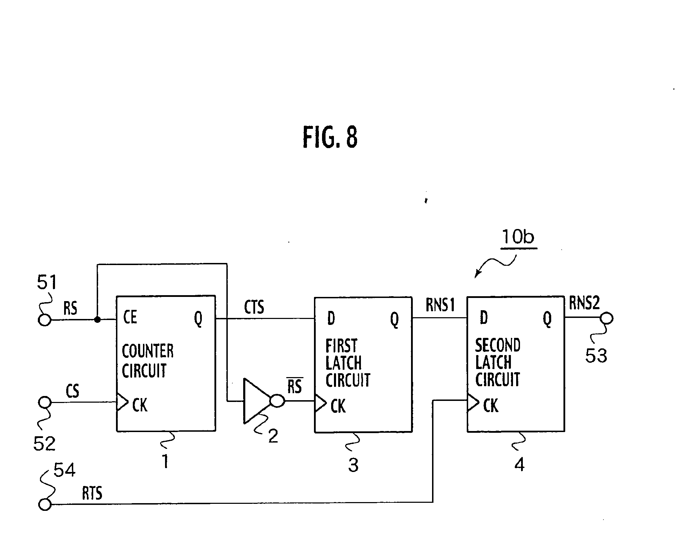

A random number generator 10b associated with the second embodiment of the present invention encompasses a second latch circuit 4 to the output side of the first latch circuit 3 as shown in Fig.8 as well as the random number generator 10a shown in Fig.1. An input D of the second latch circuit 4 electrically connects with the output Q of the first latch circuit 3. An output Q of the second latch circuit 4 connects with the random number output 53. A clock input CK connects with a random number acquisition clock input 54. The random number acquisition clock input 54 transits a random number clock acquisition signal having a constant period.

As others elements and functions are substantially similar to the first embodiment, a redundant description is omitted.

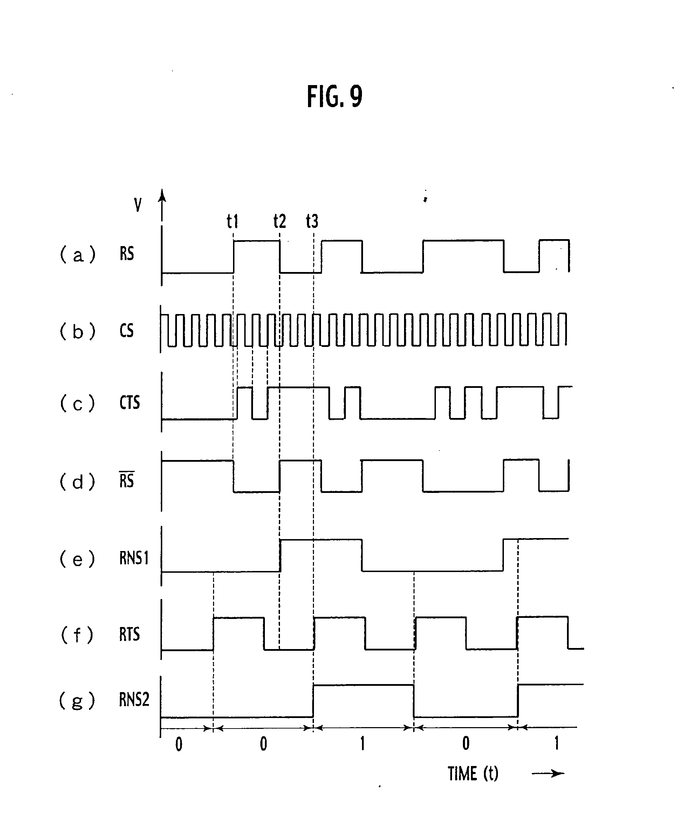

Next, An operation of the random number generator 10b associated with the second embodiment of the present invention is explained by means of Fig.9 as follows.

(A) In time t1, the random signal RS is supplied from the square wave input 51, turns into the high level from the low level as shown in Fig.9A.
(B) In an interval from time t1 to t2, the random signal RS keeps a high level state. The level of the count signal CTS supplied from the output Q alternates by detecting the leading edge of clock signal CS.
(C) In time t2, the random signal RS turns into the low level from the high level. Then, the inverter 2 provides a random turning over signal R S in order to turn the signal into the high level as shown in Fig.9(d). When a random turning over signal R S becomes the high level, the first latch circuit 3 latches count signal CTS by detecting the leading edge transited by the clock input CK, and provides the first random number signal RNS1 as shown in Fig. 9 (e).

(D) In time t3, the random number acquisition clock signal RTS having a constant period turns into the high level from the low level as shown in Fig.9(f). The second latch circuit 4 latches the first random number signal RNS1 by detecting the leading edge of random number acquisition clock signal RTS, and provides the second random number signal RNS2 as shown in Fig.9(g). Afterward, the same operation, i.e., providing the random number signal RNS by detecting the trailing edge of random signal RS, is repeated.

Random number generator 10b related to the second embodiment of the present invention does not require a plurality of noise generators, and can be miniaturized. Random number generator 10b generates a random number that does not depend upon a frequency characteristic, and docs not require adjustment of the probability of occurrence of "0"and "1". Furthermore, random number generator 10b can acquire a random number at intervals, by using random number signal RNS from the second latch circuit 4.

(THIRD EMBODIMENT)

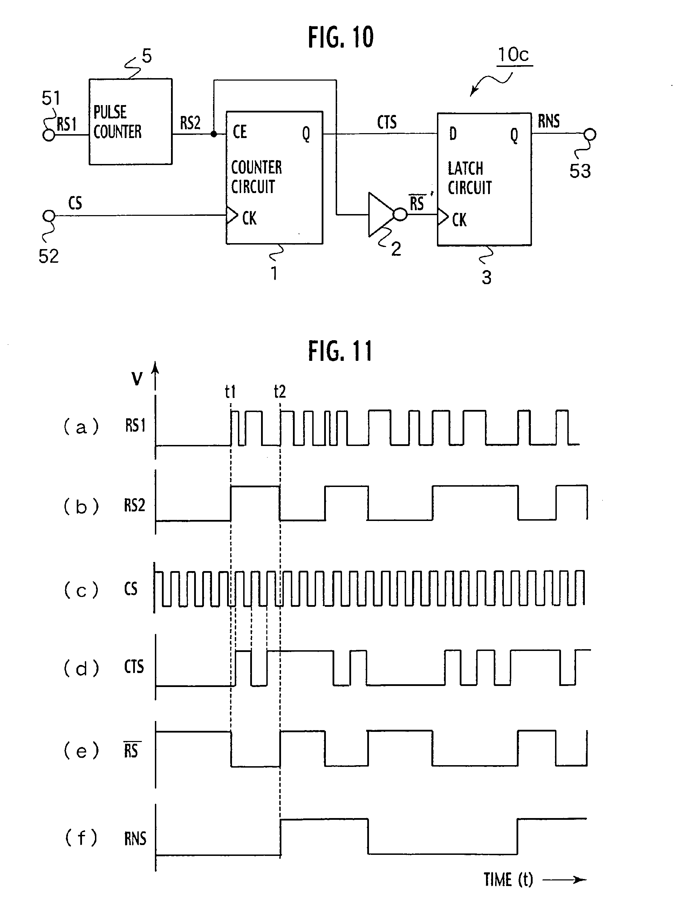

A random number generator 10c associated with the third embodiment of the present invention encompasses the pulse counter 5 between the clock enable input CE and the square wave input 51 of the counter circuit 1 of random number generator 10a as shown in Fig.10. As for the pulse counter 5, the input node electrically connects to the square wave input 51, the output node electrically connects to the clock enable input CE of counter circuit 1.

Other elements and functions being substantially similar to the first embodiment, a redundant description is omitted. An operation of the random number generator 10c associated with the third embodiment of the present invention is explained by means of Fig.11 as follows.

(A) In time t1, the first random signal RS1 turns into the high level from the low level as shown in Fig. 11(a). The pulse counter 5 provides the second random signal RS2 to turn the level state into the high level by detecting the first leading edge of random signal RS1 as shown in Fig.11 (b).

(B) The random signal RS keeps the high level state from time t1 to t2. Then, as shown in Fig.11 (d), the count signal CTS level supplied by the output Q alternates by detecting the leading edge of clock signal CS in Fig.11(c). The pulse counter 5 counts the leading edge of the random signal RS1. In addition, pulse counter 5 turns the signal state, for example, when the count value becomes 2.

(C) In time t2, a count value of pulse counter 5 becomes 2, the second random signal RS2 turns into the low level from the high level. Then, the clock input CK of the first latch circuit 3 becomes the high level as shown in Fig.11 (d). The first latch circuit 3 latches count signal CTS by detecting the leading edge of clock input CK, and provides the random number signal RNS through the random number output 53 as shown in Fig.9(e). Afterward, the same operation, ie., providing the random number signal RNS by detecting the trailing edge of random signal RS, is repeated.

A random number generator 10c of the third embodiment of the present invention does not require a plurality of noise generators, and can be miniaturized. The random number generator 10b generates a random number that does not depend upon a frequency characteristic, and does not require adjustment of the probability of occurrence of "0"and "1".

In addition, random number generator 10c is operatable even if the smallest on-state pulse width Tmin of a random signal is less than 2 times for period Tck of clock signal CS, by providing a new signal which has one of the widest minimum on-state pulse widths.

(FOURTH EMBODIMENT)

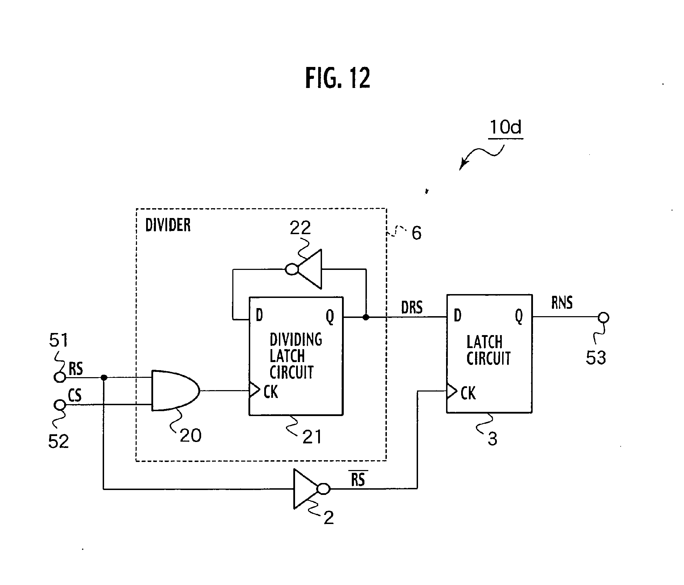

A random number generator 10d associated with the fourth embodiment of the present invention encompasses a dividing circuit 6 and a first latch circuit 3. The dividing circuit 6 is supplied with random signal RS and clock signal CS so that the on-state pulse width and the off-state width having a consent and alternates the high level and the low level with respect to transitions of the logic product output of random signal RS and clock signal CS. The first latch circuit 3 latches a dividing random signal DRS with respect to a transition of random signal RS and provides random number signal RNS as shown in Fig.12.

The dividing circuit 6 encompasses an AND circuit 20, a dividing latch circuit 21 and an inverter 22. The AND circuit 20 connects the first input node to square wave input 51, connects the second input node to clock input 52. The dividing latch circuit 21 connects an output of AND circuit 20 to a clock input. The inverter 22 connects between output Q and input D.

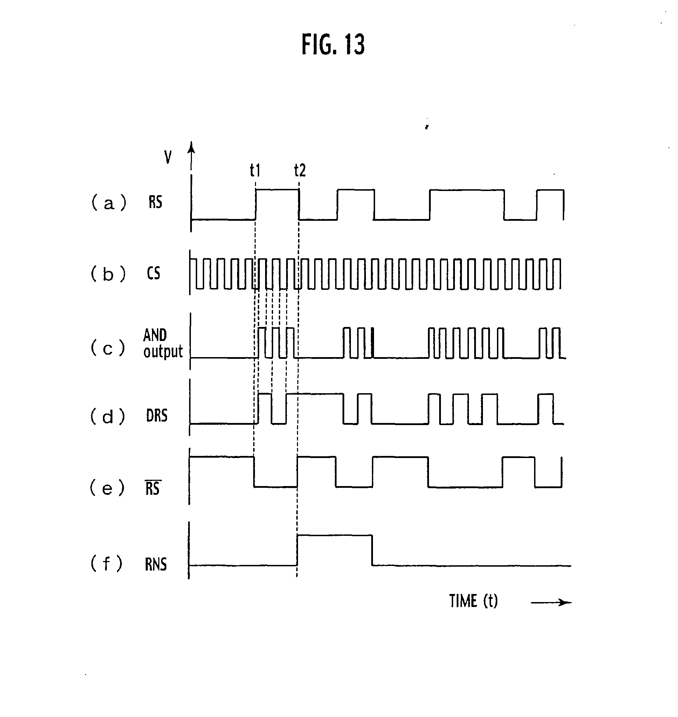

An operation of the random number generator 10d associated with the fourth embodiment of the present invention is explained by means of Fig.13 as follows.

(A) At first, as shown in Fig.13A, the random signal RS supplied from the square wave input 51 turns into the high level from the low level in time t1.

(B) During the interval from time t1 to t2, the random signal RS keeps in the high level state, and the output of the AND circuit 20 just supplies with the clock signal CS shown in Fig.13B. In this time, a level of the dividing random signal DRS supplied from the output Q alternates by detecting the leading edge of the clock signal CS as shown in Fig.13D.

(C) In time t2, the random signal RS turns into the low level from the high level, a signal supplied from the clock input CK of the first latch circuit 3 turns into the high level as shown in Fig.13E. When a signal supplied from the clock input CK turns into the high level, the first latch circuit 3 latches the dividing random signal DRS, and provides the random number signal RNS through the random number output 53 as shown in Fig.13F.

Afterward, the same operation, i.e., providing the random number signal RNS by detecting the trailing edge of random signal RS, is repeated.

The random number generator 10d related to the fourth embodiment of the present invention does not require plurality of noise generators, and can be miniaturized. Random number generator 10d generates a random number that does not depend upon a frequency characteristic, and does not require adjustment of the probability of occurrence of "0"and "1".

(FIFTH EMBODIMENT)

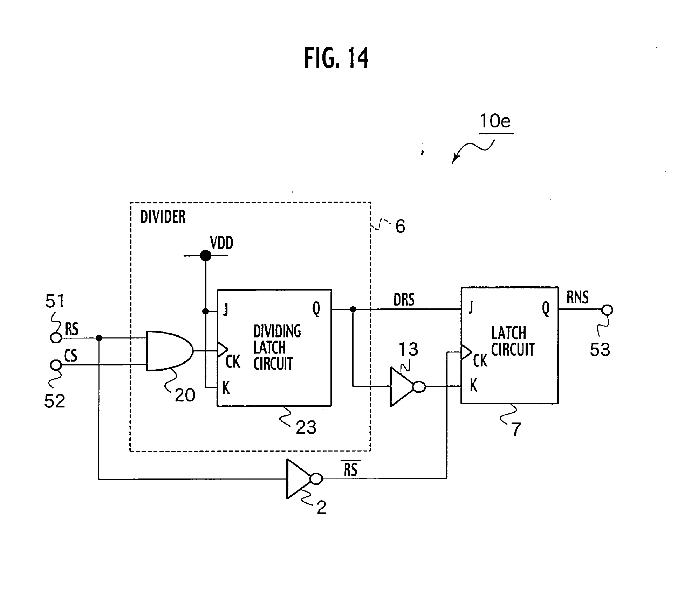

As shown in Fig. 14, a random number generator 10e associated with the fifth embodiment of the present invention encompasses latch circuit 23 (J-K type flip-flop) as a dividing latch circuit which substitutes for latch circuit 21 (D type flip-flop) of random number generator 10d as shown in Fig. 12. The random number generator 10e further encompasses a latch circuit 7 (J-K type flip-flop) which substitutes for the first latch circuit 3 (D type flip-flop). As other elements and functions are similar to the first embodiment substantially, a redundant description is omitted.

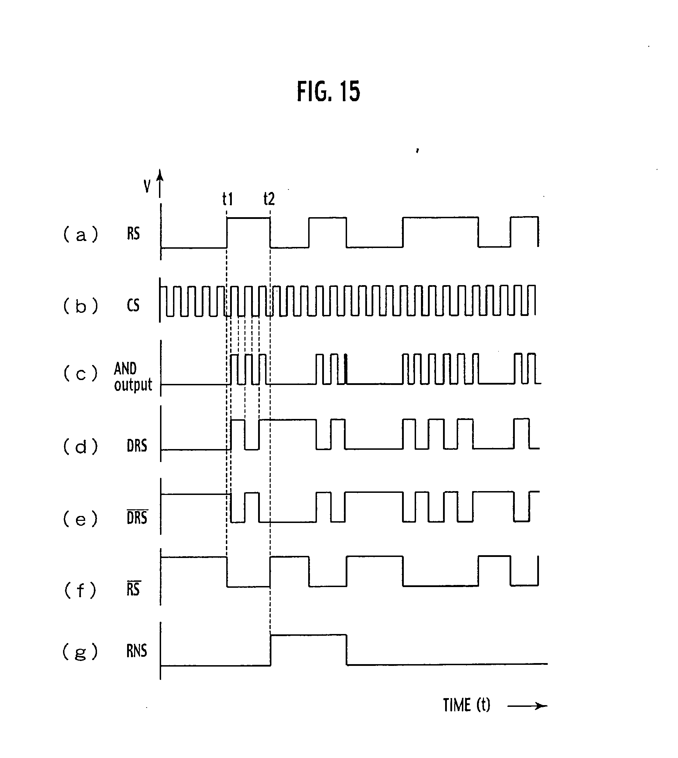

An operation of the random number generator 10e of the fifth embodiment of the present invention is explained by means of Fig.15 as follows.

(A) At first, as shown in Fig.15A, the random signal RS turns into the high level from the low level in time t1.

(B) During the interval from time t1 to t2, the random signal RS keeps at the high level state, and the output of the AND circuit 20 just provides the clock signal CS shown in Fig. 15 (b). At this time, a level of the dividing random signal DRS supplied from the output Q alternates by detecting the leading edge of clock signal CS as shown in Fig. 15 (d).

(C) When, in time t2, random signal RS turns into the low level from the high level, a signal from the clock input CK of the first latch circuit 7 becomes the high level as shown in Fig.15 (f). Then, the first input J of latch circuit 7 is supplied with the dividing random signal DRS as shown in Fig.15 (d).

The second input K of the latch circuit 7 receives the divide turning over signal $\overline{D\,R\,S}$. The latch circuit 7 latches the dividing random signal DRS by detecting the leading edge of the random turning over signal $\overline{D\,R\,S}$ as shown in Fig.15 (e), and provides the random number signal RNS as shown in Fig.15 (g). The random number signal output 53 provides the random number signal RNS.

Afterward, the same operation, i.e., providing the random number signal RNS by detecting the trailing edge of random signal RS, is repeated.

The random number generator 10e of the fifth embodiment of the present invention does not require plurality of noise generators, and can be miniaturized. Random number generator 10e generates a random number that does not depend upon a frequency characteristic, and does not require adjustment of the probability of occurrence of "0"and "1".

(OTHER EMBODIMENT)

The first through the fifth embodiments of the present invention are disclosed above. The above statements and drawings are, however, merely a part of the disclosure, and are not intended to limit this invention. A person skilled in the art will understand various substitute embodiments, examples and operative technology from the disclosure.

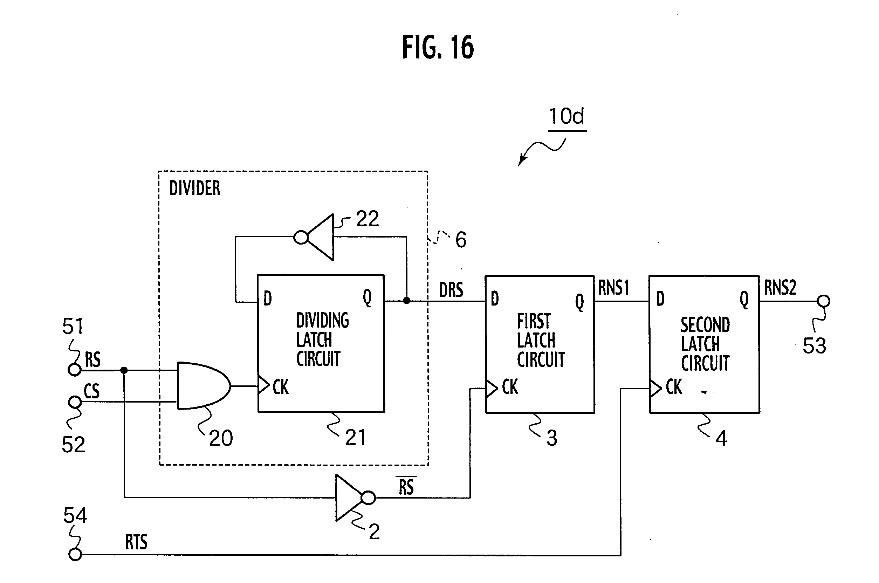

The random number generators 10d and 10e related to the fourth and the fifth embodiments can further encompass the second latch circuit of the second embodiment as shown in Fig.16.

The present invention can be achieved by switching each of a leading edge and an end edge, applying one of the leading edge and an end edge to the smallest off-state width.

The random number generators 10d and 10e can further encompass a pulse counter for providing a signal from the latch circuit as shown in the third embodiment. A period of the clock signal CS applied in random number generator 10a, 10b, 10c, 10d, 10e of the first through the fifth embodiments, may optimally less than a half of the on-state zone Tz.

The narrower a period T of clock signal CS is set than the on -state zone Tz, the less influence created by a difference of a power spectrum of the random signal RS can be suppressed.

**Claims**

1.  A random number generator comprising:

    a counter circuit configured to be supplied with a clock signal and a random signal, and to provide a count value of the clock signal with respect to a transition of the random signal; and
    a first latch circuit configured to latch the count value with respect to the transition of the random signal, and to provide a first random number signal.

2.  The random number generator of claim 1, wherein the random signal manifests a characteristic in which power spectrum intensity varies with an increase of frequency.

3.  The random number generator of claim 1, wherein the random signal manifests a characteristic in which power spectrum intensity decreases with an increase of frequency.

4.  The random number generator of claim 1, further comprising a second latch circuit configured to receive a random number acquisition clock signal having a constant period and the first random number signal, to latch the first random number signal with respect to a transition of the random number acquisition clock signal, and to provide a second random number signal.

5.  The random number generator of claim 4, wherein the frequency of the random number acquisition clock is lower than the frequency of the random signal.

6.  The random number generator of claim 4, wherein the transition of the random number acquisition clock signal represents a leading edge of the random number acquisition clock signal when the random number acquisition clock signal changes from a low level to a high level.

7.  The random number generator of claim 1, wherein a pulse counter is accessible by the clock enable input, and the output of the pulse counter becomes the random signal.

8.  The random number generator of claim 1, further comprising an inverter connected between the clock enable input side and a clock input side of the first latch circuit.

9.  The random number generator of claim 1, wherein a period of the clock signal is less than a half of a on-state zone $T_2$ which is obtained by subtracting a minimum on-state pulse width Tmin from a maximum on-state pulse width Tmax.

10. The random number generator of claim 1, wherein the first latch circuit is a D type flip-flop.

11. A random number generator comprising:

    an AND circuit configured to be supplied with a random signal and a clock signal, and to generate a logic product of the random signal and the clock signal;
    a dividing latch circuit configured to provide alternately a high level signal and a low level signal with respect to the logic product output; and
    a first latch circuit configured to latch the count value with respect to a transition of the random signal, and to provide a random number signal.

12. The random number generator of claim 11, wherein the random signal manifests a characteristic in which power spectrum intensity varies with an increase of frequency.

13. The random number generator of claim 11, wherein the random signal manifests a characteristic in which power spectrum intensity decreases with an increase of frequency.

14. The random number generator of claim 11, further comprising a second latch circuit configured to receive a random number acquisition clock signal having a constant period and the first random number signal, to latch the first random number signal with respect to a transition of the random number acquisition clock signal, and to provide a second random number signal.

15. The random number generator of claim 14, wherein the frequency of the random number acquisition clock is lower than the frequency of the random signal.

16. The random number generator of claim 14, wherein the transition of the random number acquisition clock signal represents a leading edge of the random number acquisition clock signal when the random number acquisition clock signal changes from a low level to a high level.

17. The random number generator of claim 11, further comprising a pulse counter being accessible by the clock enable input, wherein the output of the pulse counter becomes the random signal.

18. The random number generator of claim 11, wherein a period of the clock signal is less than a half of a on-state zone Tz which is obtained by subtracting a minimum on-state pulse width Tmin from a maximum on-state pulse width Tmax.

19. The random number generator of claim 11, further comprising an inverter connected between the first input side and a clock input side of the first latch circuit.

20. The random number generator of claim 11, wherein the first latch circuit is a J-K type flip-flop.

# FIG. 1

# FIG. 2

## FIG. 3

## FIG. 4

# FIG. 5

FREQUENCY OF OCCURRENCE

| 0 | 1 | 0 | 1 | 0 | 1 | 0 | 1 | 0 | 1 | 0 | 1 | 0 | 1 | 0 | 1 | 0 | 1 | 0 | 1 | 0 | 1 |

PULSE WIDTH (s)

# FIG. 6

1/f

L1

L2

SIGNAL INTENSITY (dbm)

1        10        100        1000        10000

FREQUENCY (Hz)

FIG.7A

FIG.7B

# FIG. 8

# FIG. 9

# FIG. 10

PULSE COUNTER 5

51 RS1

COUNTER CIRCUIT 1

CE   Q

RS2

CK

CS

52

2 $\overline{RS}$'

LATCH CIRCUIT 3

10c

D   Q   RNS

53

CK

# FIG. 11

( a )   RS1

( b )   RS2

( c )   CS

( d )   CTS

( e )   $\overline{RS}$

( f )   RNS

V

t1   t2

TIME (t) ⟶

# FIG. 12

# FIG. 13

# FIG. 14

# FIG. 15

TIME (t) ⟶

## FIG. 16

EP 1 398 691 A2